Europäisches Patentamt

(19) European Patent Office

Office européen des brevets

(11) Publication number: **0 436 520 A1**

## (12) EUROPEAN PATENT APPLICATION

(21) Application number: 91810002.5

(22) Date of filing: 03.01.91

(51) Int. Cl.⁵: **C08F 210/16, F16L 9/12, F17D 1/04**

(30) Priority: 03.01.90 US 460531

(43) Date of publication of application:
10.07.91 Bulletin 91/28

(84) Designated Contracting States:
AT BE CH DE DK ES FR GB GR IT LI LU NL SE

(71) Applicant: GAS RESEARCH INSTITUTE
8600 West Bryn Mawr Avenue
Chicago Illinois 60631 (US)

(72) Inventor: Raske, David T.
1 S 160 Winfield Road
Wheaton, Illinois 60187 (US)
Inventor: Young, John E.
6701 King Court
Woodridge, Illinois 60517 (US)

(74) Representative: Feldmann, Paul David et al
c/o Patentanwaltsbüro FELDMANN AG
Kanalstrasse 17
CH-8152 Glattbrugg (CH)

(54) Extended-life polyethylene gas distribution pipe.

(57) A copolymer of ethylene and a minor proportion of an alpha-olefin having six and greater carbon atoms characterized by having an average molecular weight greater than about 200,000 and 7 and greater alkyl branches per 1,000 backbone carbon atoms, each alkyl branch having 4 and greater carbon atoms. The branched polyethylene is useful for provision of extended life polyethylene pipe, particularly gas distribution pipes providing lifetimes of at least 2 and up to 10 times the life of presently used polyethylene pipe.

EP 0 436 520 A1

# EXTENDED-LIFE POLYETHYLENE GAS DISTRIBUTION PIPE

This invention was made with Gas Research Institute support under Agreement No. 5082-271-0717 with the University of Chicago acting under Contract No. W-31-109-ENG-38 with the U.S. Department of Energy. The U.S. Government has certain rights in this invention.

## BACKGROUND OF THE INVENTION

### Field of the Invention

This invention relates to extended-life polyethylene pipe, particularly gas distribution pipe. Polyethylene pipe having chemical characteristics as set forth in this invention extends the life of the pipe by factors of at least two and up to about ten times the life of presently used polyethylene pipe.

### Description of the Prior Art

Polyethylene pipe has been used for gas distribution in the United States for over twenty years. Currently about 15 percent of the distribution lines in service are polyethylene and polyethylene is used in about 85 percent of new installation of underground gas distribution lines. Utilization of polyethylene underground distribution lines results in lower installation costs, reduced operating and maintenance costs, and better corrosion resistance than previously used steel pipe resulting in expected longer life. Extended lifetime for underground pipe has important economic impacts since in the United States there are approximately 250,000 miles of plastic gas distribution pipe in service. The cost of replacement of underground plastic pipe is about $30.00 per foot, representing a current total replacement cost of nearly 40 billion dollars.

U.S. Patent 4,424,321 teaches a process for producing copolymers of ethylene and 0.5 to 10 mole percent $C_4$-$C_{10}$ alpha-ofelin. The '321 patent teaches that such copolymers have excellent mechanical properties such as impact strength, stress cracking resistance and transparency, especially excellent tensile impact strength and has excellent properties suitable for a film, a pipe, an injected molded product or a rotation molded product. The '321 patent is principally directed to the high productivity of the copolymer of ethylene and an alpha-olefin using a catalyst system which does not have high catalytic activity in the homopolymerization of ethylene.

U.S. Patent 4,405,774 teaches a film copolymer of ethylene and 0.5 to 8 mole percent $C_4$-$C_{10}$ alpha-olefin forming a film providing high impact resistance and improvement in both transparency and opening property, as compared to polyethylene films.

U.S. Patent 4,481,342 teaches a process for preparing low density copolymers of ethylene with $C_4$-$C_8$ alpha-olefins to provide polymers with densities less than about 0.942 grams/ml.

U.S. Patent 4,690,991 teaches a process for producing copolymers of ethylene and alpha-olefins having at least 8 carbon atoms to provide improved tensile strength, tear strength, and piercing strength of films.

U.S. Patent 4,668,752 teaches ethylene and $C_4$-$C_{20}$ alpha-olefin copolymers providing sheet materials of high impact strength and transparency. The '752 patent teaches the effect of densities of 0.85 to 0.90 and 0.90 to .93 g/cm³ and controlling the degree of branching have upon film properties.

U.S. Patent 4,522,987 teaches an ethylene/1-hexene copolymer having high dispersivity, based upon a random distribution of the alpha-olefin on the ethylene chain, and having a density of about 0.910 to about 0.935.

The need for reference standards for polyethylene pipe has been recognized and reference standards for polyethylene resins and piping materials used for gas pipeline transmission have been reported in "Reference Standard Polyethylene Resins and Piping Materials, Final Report" (Oct. 1, 1985-Sept. 30, 1986) J.M. Crissman, Gas Research Institute, Grant No. 5084-260-1013, Oct. 1986. The Crissman report shows typical polyethylene pipe in current use to have branching characteristics of 4.27 butyl groups per 1,000 carbon atoms for unpigmented resin and 4.56 butyl groups per 1,000 carbon atoms for pigmented resins. The mean density for three sizes of pipe from 1.59 cm O.D. to 11.4 cm O.D. was 0.937-0.938 g/cm³. The report established a number of physical and chemical characteristics of the resins and pipes made therefrom.

Indications that branched chain distribution had a greater effect upon lifetime of polyethylene pipe than the type of the branches has been suggested by Narumi Ishikawa, Tetsuo Shimizu, Yoshikazu Shimamura, Yuichiro Goto, Katsumi Omori and Nozomu Misaka, "Effect of Molecular Structure of Resin on Long-Term Performance of Polyethylene Gas Pipe", Proceedings of the Tenth Plastic Fuel Gas Pipe Symposium, October 27-29, 1987, New Orleans, Louisiana, pages 175-183. The indications of importance of branched chain distribution suggests that the high dispersivity material with random distribution of alpha-olefins, as taught by U.S. Patent 4,522,987, would not produce long lifetime pipe formulations, although it may be suitable for film applications.

## SUMMARY OF THE INVENTION

Polyethylene pipe is a composite of amorphous and crystalline ethylene polymer molecules of a range of molecular weights and branches to which antioxidants, ultraviolet absorbents, lubricants to aid pipe extrusion, and other materials have been added. Additionally, oxidized polyethylene and antioxidant, ethylene oligomers and other unsaturated hydrocarbons, polymerization catalyst residues, and free-radical compounds are present. Additionally, the pipe making process leads to physical and chemical inhomogeneities between the inner and outer surfaces and the bulk material.

We have found that extended life branched polyethylene pipe may be obtained wherein the branched polyethylene has the combined properties of average molecular weight greater than about 200,000 ; and 7 and greater alkyl branches per 1,000 backbone carbon atoms, each alkyl branch having 4 and greater carbon atoms. Particularly preferred branched polyethylene pipe will have a number average molecular weight greater than about 25,000 and a density about 0.93 to about 0.94 gram/cm$^3$.

## DESCRIPTION OF PREFERRED EMBODIMENTS

A major problem in the evaluation of polyethylene pipes has been to obtain a valid assessment of the mechanical behavior of the pipes and a parallel study of chemical and molecular properties of the polyethylene pipes. Particularly, it is desired to provide a mechanical test which can be performed over a short period of time which may serve as a valid prediction for assessing the expected lifetime service of pipes produced from various polyethylene comonomer materials. We have found the Constant-Tensile Load (CTL) test, a hybrid crack-growth/creep-rupture test performed on ring-type samples cut from the pipe, results in stress versus time-to-failure results similar to those obtained from pipe burst tests. The CTL test, developed by Battelle Columbus Division under Gas Research Institute funding (M. J. Cassady, et al., "The Development of Improved Plastic Piping Materials and Systems for Fuel Gas Distribution, "Battelle Columbus Laboratories Annual Report for 1978, PBBO-224603, August 1, 1979) has been found to have statistically significant correlations in predicting long-term mechanical performance or polyethylene pipe based upon chemical parameters such as chain branching, crystallinity, density, and molecular weight. Statistical analyses have shown that comparison of the CTL data of the low-stress brittle failure region provides accelerated laboratory data suitable as guidance for the long-term service performance of polyethylene pipe materials.

Mechanical properties of polyethylene pipe were obtained by the CTL test. The test specimens were 13 mm wide rings cut from a section of pipe with razor notches cut at both the inner and outer surfaces of the pipe ring at a location of the minimum thickness and a second notch at 180 degrees from the first notch. The notch depth was adjusted to be equal to one-fourth the nominal wall thickness. All notching was performed in a fixture locking the razor blade to assure uniform and consistent notch depths and without excessive localized deformations. In the CTL test, a constant-tensile load is applied to the notched specimen by a split stainless steel disk which fits within the inside diameter of the pipe ring and a load applied by weights through a rod and clevis arrangement. The time to failure, defined as specimen separation, is automatically recorded by a timer. The load was applied gradually to avoid impact loadings. The CTL test data obtained provides the nominal stress over the actual thickness of uncut pipe wall ligament and the time to failure.

By statistical analysis of existing polyethylene pipe materials, significant correlations were established between chemical constituents and mechanical behavior to predict the chemical characteristics necessary for improved mechanical behavior of polyethylene pipe and to provide polyethylene pipes with extended life. An analytical model was formulated which indicated that the service life of gas distribution pipes from the current design life of 25 to 30 years could be extended to as long as approximately 300 years.

The relationships between chemical characteristics and mechanical strength of the polyethylene pipes were measured by analysis of branching type and concentrations ; molecular weight averages and distributions ; density ; and low molecular weight hydrocarbons present.

We have found that reliable determinations of molecular branching may be obtained by $^{13}$C nuclear magnetic resonance (NMR) characterizing both the type and degree of branching of the polyethylene molecules. A 20 weight percent solution of the pipe material was prepared by dissolving the polyethylene in 1,1,2,2-tetrachloroethane-d$_2$ and maintained at approximately 125°C in a 10 mm NMR tube by heating in an oil bath. No attempt was made to remove dissolved oxygen, metallic compounds, or other impurities since impurities aid in spin relaxation following the excitation. During the NMR measurements, the sample was maintained at 120°C and spun at 15 Hz. Pulsing and data collection were carried out for a period of at least 15 hours during which data from over 5500 152° pulses were collected. Decoupling for $^{1}$H and $^{13}$C spin-spin interactions was gated such that it was only on during data collection in order to avoid signal enhancement due to the Nuclear Overhouser Effect. Otherwise, signal enhancement would lead to errors in quantification of the measured number of branches, since different carbons, such as methyl, methylene, and the like, give rise to different signal enhancement. For each period, data acquisition time was 1.5 seconds and the relaxation delay was 8.5 seconds. Analyses of duplicate and triplicate determinations show good reproduceability of the data.

We found that the determination of molecular weight averages by Gel Permeation Chromatography (GPC) to be a reliable procedure for weight average molecular weight and number average molecular weight. The GPC analyses were achieved by making radial cuts to achieve several thin slices which were then cut into small pieces and 6.5 mg samples were placed in an injector vial with 4 ml of 1,2,4-trichlorobenzene stabilized with 0.1 percent BHT (Fisher HPLC grade) and the vials sealed tightly with a foiled lined cap and placed in a circulating air oven at 155° C. The samples were gently agitated until solution was complete, usually 1 to 2 hours, and the solutions transferred to autofiltration vials. The Gel Permeation Chromatography analyses were done using a Waters model 150C high temperature gel permeation chromatograph equipped with a single 500 mm Shodex E-linear (mixed bed) column and a Foxboro infrared detector with heated cell operating at 3.42 micrometers (methylene C-H stretching frequency). The oven and injector compartment temperature was maintained at 140°C ; pump/solvent compartment temperature was maintained at 20°C ; maximum pressure was 220 bars ; the flow rate, stand-by 0.1 ml/min. and running 1 ml/min. ; run time 22 minutes ; and injection volume 220 microliters. The samples were automatically injected and data collected and analyzed by computer. Calibration was done with a NBS standard 1475 providing $M_w$ 49,900 and Mn of 16,800 and light scattering was used to determine $M_w$ of 220,000 for a standard identified as Phillips Marlex BHB 5003. For pipe sample data, the average percentage difference for duplicate injections is 2.35± 2.41 percent for Mn and 1.94± 1.66 for $M_w$, providing reliable molecular weight data.

Density measurements were made by measuring the volume of a cut sample of pipe using a Beckman model 930 Air Comparison Pycnometer and the mass using an analytical balance. The Air Pycnometer was calibrated using a steel ball of known volume as a standard. Good statistically valid results were obtained on duplicate samples.

A chemical/mechanical model of the CTL data was developed by an examination of the individual chemical variables to determine their significance and effect on the CTL data, an examination of the intercorrelations between the chemical variables, and formulation of a multiple linear regression analysis model. In each of these analyses, the available chemical parameters were treated as independent variables without regard to their physical meaning or effect on the mechanical properties of the polyethylene pipe. To ascertain what chemical variables to use for the model, the degree to which the chemical parameters are interrelated or correlated was determined to provide a model of uncorrelated variables which also considered the physical meaning of the parameters. Investigation of suitable uncorrelated, physically meaningful parameters for the chemical/mechanical model was stepwise regression starting with no chemical parameters and then adding the one parameter that produces the largest increase in the correlation coefficient. As each variable is entered, the previous parameters are also examined with respect to the new model to ascertain their appropriateness using the F-test. The model arrived at has the equation :

$\log t_l = 68.3 - 73.3 \text{(Density)} + 0.171 \text{(NB)} + 0.0361 \text{(NC)} + 0.0128 (M_w) + 0.070 (M_n) - 1.73 \text{(CTL Stress/RTT Strength)}$

wherein $\log t_l$ is the logarithm of the CTL time to failure in hours ; Density is the density of the extruded pipe; NB is the total number of branches per 1,000 backbone carbon atoms ; NC is the total number of carbon atoms in the branches ; $M_w$ is the weight average molecular weight/1,000 ; Mn is the number average molecular weight/1,000 ; CTL Stress is the nominal stress over the uncut ligament of the test specimen ; and RTT Strength is the ASTM D 2290 ring tensile strength of the pipe. Uniform distribution of the error terms indicates that the above model is appropriate for the data. The standard deviation for this model has been found to be 0.217 and the distribution of error terms is sufficient to be considered normally distributed. The model of the mechanical/chemical property data given by the above equation satisfies the requirements for linearity and normality and therefore provides an unbiased description for the effect of chemical and molecular properties on the CTL resistance of polyethylene gas pipe. The model yielded a coefficient of determination $R_2$ equal to 0.888 indicating a high degree of statistical significance. Further, the model can be extrapolated to obtain estimates for improvements in the CTL resistance of polyethylene pipes by changes in the chemical constituents of the base resin. the model has been shown to predict the general trends of the data in a fashion consistent with the experimental results.

Following analysis of the chemical/mechanical model described above, we have found that extended life branched polyethylene pipe may be obtained wherein the branched polyethylene has the combined properties of average molecular weight greater than about 200,000 ; and 7 and greater alkyl branches per 1,000 backbone carbon atoms, each alkyl branch having 4 and greater carbon atoms. Particularly preferred branched polyethylene pipe will have a number average molecular weight greater than about 25,000 and a density about 0.93 to about 0.94 gram/cm³. Especially preferred average molecular weights are in the order of about 200,000 to about 300,000 with number average molecular weights of about 25,000 to about 30,000. It is preferred that the branched polyethylene pipe of this invention have 8 to about 12 alkyl branches per 1,000 backbone carbon atoms, and especially preferred to have about 8 to about 10 alkyl branches per 1,000 backbone carbon atoms, each alkyl branch having 4 to about 12 carbon atoms and especially preferred to have each alkyl branch having 4 to about 6 carbon atoms. In one preferred embodiment, each alkyl branch has 4 carbon atoms which is obtained by using alpha-hexene as the copolymer.

While the branched polyethylene has been defined and described with special reference for its properties for underground gas pipeline piping, it is readily apparent that the long-lived branched polyethylene may be suited for other similar uses. The copolymer of ethylene and a minor proportion of an alpha-olefin having 6 and greater carbon atoms is used to form the copolymer of ethylene having the above defined properties.

The process for forming branched polyethylene according to the present invention is similar to that as taught in U.S. Patent 4,405,774 of copolymerizing ethylene with an alpha-olefin in the presence of a Ziegler-Natta catalyst or a Phillips-type catalyst. The Ziegler process for copolymerization of ethylene with an alpha-olefin is well-known. A typical reaction scheme would be to fill a reaction pressure vessel about half full with a dried hydrocarbon solvent, such as heptane, which is inert to olefins and the catalyst, the catalyst being a Ziegler catalyst such as triethylaluminum and a mixture of $TiCl_3$ and $AlCl_3$ suspended in the inert liquid medium. Various promoters and auxiliary components may be added to the catalyst as described in U.S. Patent 4,405,774. After purging with dry nitrogen to remove oxygen, an aluminum alkyl such as triethylaluminum is added along with the titanium compound. The comonomer is added, 1-hexene suitable for producing a copolymer with branches 4 carbons in length, and the reactor partially pressurized with hydrogen. The proportions of the comonomer, hydrogen, and ethylene, along with the reaction temperature, will determine the final molecular weight of the polymer and the concentration of the comonomer in the polymer, the exact ratios to be determined by ascertainment in the specific system used. Following addition of the comonomer and hydrogen, the reactor is heated to the desired temperature, in the order of 90°C, and ethylene added to reach the desired final pressure, approximately 10 atmospheres. As the reaction proceeds, the reactor is cooled to maintain the desired temperature of about 90°C and ethylene is added to maintain the pressure. At the completion of the reaction, polymer slurry is recovered, the catalyst deactivated by treatment with compounds such as alcohols, followed by hydrochloric acid, and the polymer recovered.

While in the foregoing specification this invention has been described in relation to certain preferred embodiments thereof, and many details have been set forth for purpose of illustration it will be apparent to those skilled in the art that the invention is susceptible to additional embodiments and that certain of the details described herein can be varied considerably without departing from the basic principles of the invention.

## Claims

1. Branched polyethylene pipe wherein said branched polyethylene has the properties : weight average molecular weight greater than about 200,000 ; and 7 and greater alkyl branches per 1,000 backbone carbon atoms, each said alkyl branch having 4 and greater carbon atoms.

2. The branched polyethylene pipe of claim 1 having number average molecular weight greater than about 25,000.

3. The branched polyethylene pipe of claim 2 having number average molecular weight of about 25,000 to about 30,000.

4. The branched polyethylene pipe of Claim 3 having density about 0.93 to about 0.94 grams/cm³.

5. The branched polyethylene pipe of Claim 1 having density of about 0.93 to 0.94 grams/cm³.

6. The branched polyethylene pipe of Claim 1 having weight average molecular weight of about 200,000 to about 300,000.

7. The branched polyethylene pipe of Claim 1 having 8 to about 12 alkyl branches per 1,000 backbone carbon atoms.

8. The branched polyethylene pipe of Claim 1 having 8 to about 10 alkyl branches per 1,000 backbone carbon atoms.

9. The branched polyethylene pipe of Claim 1 wherein each alkyl branch has 4 to about 12 carbon atoms.

10. The branched polyethylene pipe of Claim 1 wherein each alkyl branch has 4 to about 6 carbon atoms.

11. The branched polyethylene pipe of Claim 1 wherein each alkyl branch has 4 carbon atoms.

12. The branched polyethylene pipe of Claim 1 having weight average molecular weight of about 200,000 to about 300,000 and having 8 to about 12 alkyl branches per 1,000 backbone carbon atoms.

13. The branched polyethylene pipe of Claim 12 wherein each alkyl branch has 4 to about 12 carbon atoms.

14. The branched polyethylene pipe of Claim 12 having 8 to about 10 alkyl branches per 1,000 backbone carbon atoms.

15. The branched polyethylene pipe of Claim 12 wherein each alkyl branch has 4 to about 6 carbon atoms.

16. The branched polyethylene pipe of Claim 12 wherein each alkyl branch has 4 carbon atoms.

17. The branched polyethylene pipe of Claim 12 having number average molecular weight of about 25,000 to about 30,000.

18. A copolymer of ethylene and a minor proportion of an alpha-olefin having 6 and greater carbon atoms characterized by having an average molecular weight greater than about 200,000 and 7 and greater alkyl branches per 1,000 backbone carbon atoms, each said alkyl branch having 4 and greater carbon atoms.

19. A copolymer of Claim 18 having number average molecular weight greater than about 25,000.

20. A copolymer of Claim 19 having number average molecular weight of about 25,000 to about 30,000.

21. A copolymer of Claim 18 having density of about 0.93 to 0.94 grams/cm³.

22. A copolymer of Claim 18 having average molecular weight of about 200,000 to about 300,000.

23. A copolymer of Claim 18 having 8 to about 12 alkyl branches per 1,000 backbone carbon atoms.

24. A copolymer of Claim 18 having 8 to about 10 alkyl branches per 1,000 backbone carbon atoms.

25. A copolymer of Claim 18 wherein each alkyl branch has 4 to about 12 carbon atoms.

26. A copolymer of Claim 18 wherein each alkyl branch has 4 to about 6 carbon atoms.

27. A copolymer of Claim 18 wherein each alkyl branch has 4 carbon atoms.

28. A copolymer of Claim 18 having average molecular weight of about 200,000 to about 300,000 and having 8 to about 12 alkyl branches per 1,000 backbone carbon atoms.

29. A copolymer of claim 28 wherein each alkyl branch has 4 to about 12 carbon atoms.

30. A copolymer of Claim 28 having 8 to about 10 alkyl branches per 1,000 backbone carbon atoms.

31. A copolymer of Claim 28 wherein each alkyl branch has 4 to about 6 carbon atoms.

32. A copolymer of Claim 28 wherein each alkyl branch has 4 carbon atoms.

33. A copolymer of Claim 28 having number average molecular weight of about 25,000 to about 30,000.

European Patent Office

**EUROPEAN SEARCH REPORT**

Application Number

| | DOCUMENTS CONSIDERED TO BE RELEVANT | | EP 91810002.5 |
|---|---|---|---|

| Category | Citation of document with indication, where appropriate, of relevant passages | Relevant to claim | CLASSIFICATION OF THE APPLICATION (Int. Cl.5) |
|---|---|---|---|
| X | <u>US - A - 4 438 238</u><br>(FUKUSHIMA et al.)<br>  * Claims 1,4,5; column 1,<br>    lines 17-24 *<br>-- | 1,5,<br>7-10,<br>18,21 | C 08 F 210/16<br>F 16 L    9/12<br>F 17 D    1/04 |
| X | <u>EP - A1 - 0 109 779</u><br>(MITSUI PETROCHEMICAL INDUS-<br>TRIES, LTD.)<br>  * Claims 1,4; page 19, lines<br>    14-20; page 14, lines 23-32;<br>    example 7 *<br>-- | 1,5,<br>7-10,<br>18,21 | |
| D,X | <u>US - A - 4 424 321</u><br>(TSUBAKI et al.)<br>  * Claims 1,9; column 2, lines<br>    30-37; examples 5,9 *<br>-- | 1,5,9,<br>10,18,<br>21 | |
| D,X | <u>US - A - 4 668 752</u><br>(TOMINARI et al.)<br>  * Claims 1,3; column 12,<br>    lines 27-32 *<br>-- | 1,9,<br>10,18 | TECHNICAL FIELDS<br>SEARCHED (Int. Cl.5) |
| A | <u>US - A - 3 902 532</u><br>(CARROW)<br>  * Claims 1,2,7 *<br>-- | 1,5,9,<br>10,18,<br>21 | C 08 F  10/00<br>C 08 F 210/00<br>F 16 L   9/00<br>F 17 D   1/00 |
| A | <u>EP - A1 - 0 010 814</u><br>(CHEMISCHE WERKE HÜLS AKTIEN-<br>GESELLSCHAFT)<br>  * Claim; page 4, lines 25-29 * | 1,18 | |
| A | <u>DE - B2 - 2 014 172</u><br>(PHILLIPS PETROLEUM CO.)<br>  * Claim 1; column 6, lines 23<br>    -27 *<br>---- | 1,18 | |

The present search report has been drawn up for all claims

| Place of search | Date of completion of the search | Examiner |
|---|---|---|
| VIENNA | 04-04-1991 | PUSTERER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)